# EUROPEAN PATENT SPECIFICATION

(11) **EP 2 804 141 B1**
(45) Date of publication and mention of the grant of the patent: **02.09.2015**
(21) Application number: 14168111.4
(22) Date of filing: 13.05.2014
(51) Int. Cl.: G06F 9/54, G06Q 10/08, G06F 17/30

(54) **MANUFACTURING SYSTEM WITH MATERIALS REQUIREMENTS PLANNING SYSTEM**
Produktionssystem und Planungssystem für benötigte Ausgangsstoffe
Système de production et de planification des matériaux requis

(30) Priority: 13.05.2013 US 201313893078
(43) Date of publication of application: 19.11.2014
(73) Proprietor: SAP SE, 69190 Walldorf (DE)
(72) Inventor: Steinbach, Jochen, 69190 Walldorf (DE); Herrmann, Holger, 69190 Walldorf (DE)
(74) Representative: Richardt Patentanwälte PartG mbB

(56) References cited:
- US-A1- 2002 178 077
- US-A1- 2012 084 278
- US-B2- 7 357 298
- JUCHANG LEE ET AL: "SAP HANA distributed in-memory database system: Transaction, session, and metadata management", DATA ENGINEERING (ICDE), 2013 IEEE 29TH INTERNATIONAL CONFERENCE ON, IEEE, 8 April 2013 (2013-04-08), pages 1165-1173, XP032430946, DOI: 10.1109/ICDE.2013.6544906 ISBN: 978-1-4673-4909-3
- "Unleash the Power of Java Stored Procedures An Oracle White Paper", , 1 June 2002 (2002-06-01), XP055167606, Retrieved from the Internet: URL:http://www.oracle.com/technetwork/data base/enterprise-edition/ow-30820-java-stor ed-proc-paper.pdf [retrieved on 2015-02-05]

## Description

### Field of the invention

The invention relates to the field of automated manufacturing systems and materials requirements planning systems.

### Background and related art

Manufacturing systems are usually directed toward the mass production of products. Modern manufacturing includes all intermediate processes required for the production and integration of a product's components. The degree of automation has been steadily increasing over the last decades. The task of optimally determining the amount and type of materials and components required for the production process is of crucial importance for ensuring that expensive production pipelines are not interrupted and for ensuring that the product can be sold at a competitive price. Due to the growing complexity of many goods, the complexity of materials requirements planning has also increased significantly. In addition, the increasingly shorter product life-cycles, in particular in the context of electronic consumer goods, are a challenge for materials requirements planning systems.

As the number of materials and components that may be ordered may exceed several hundreds of millions of items, and as each material or component may be ordered from a plurality of different vendors, specially adapted and highly efficient database management systems and respective client application programs may be necessary for providing a reliable, flexible and efficient materials requirements planning system.

Applications implementing a materials requirements planning system for a manufacturing system make use of a database to store data. Several types of database management systems exist that are optimized for processing a particular kind of database query highly efficiently. Usually, said database management systems (DBMSs) are not ideal in the context of materials requirements planning system as the materials requirements planning involves a wide spectrum of different kinds of queries. General-purpose database systems are often not efficient enough to cope with the big amounts of data that needs to be processed for planning the required materials in a large mass production line.

US7357298 describes integrating event-based production information with financial and purchasing systems in product manufacturing. Some of its embodiments include a method of tracking production information, a method of analyzing event-based production information to provide financial reports, a method of adapting an online production documentation system to provide financial report data, and a production documentation system.

### Summary

It is an objective of the present invention to provide for an improved manufacturing system, materials requirements planning system and corresponding method as specified in the independent claims. Embodiments of the invention are given in the dependent claims. Embodiments of the present invention can freely be combined with each other if they are not mutually exclusive.

A 'database' as used herein is an organized collection of data. The data may be organized to model relevant aspects of reality in a way that supports processes requiring this information. A database may be a relational database, e.g. a row-oriented or column oriented database. The database may also be referred to as 'database layer'. The database may be a data structure comprising one or more tables and a plurality of indices. The database may be stored to a non-volatile storage medium or may be an in-memory database or a combination thereof.

An 'application program' as used herein is a piece of program logic that may be based on hardware, software, firmware, or any combination thereof. The application program may also be referred to as 'application layer' or 'application'. According to embodiments, the application program comprises an interface for sending database queries to the database and for receiving the results from the database.

A 'task' as used herein is a piece of data, e.g. a data object. The piece of data may be received by the MRPS via an interface of the MRPS from another one of the components of the manufacturing system. The data may be received in the form of a request for controlling the production, the procurement and/or the distribution of one or more of the materials and components used for producing the plurality of goods in order to generate the goods or to generate some intermediate products.

A 'sub-task' as used herein is a fragment of said piece of data that also comprises or is associated with some executable program logic or a command, e.g. a database query. While a task may be related to a plurality of different components and materials and their respective processing, procurement and distribution, each sub-task has assigned exactly one material type or component type.

A 'material' is a data object representing a physical material or an aggregation of multiple physical materials and substances together constituting the physical material.

A 'compound' is a data object representing a physical compound or an aggregation of multiple physical sub- compounds which together constituting said physical compound.

In one aspect, the invention relates to an automated manufacturing system comprising:
- a production line configured to automatically produce a plurality of goods from a plurality of materials and components;
- a monitoring unit configured to continuously generate monitoring data, the monitoring data comprising the amounts and types of the materials and components consumed by the production line; for example, the monitoring unit may be a piece of hardware- and/or software based program logic that is connected to one or more sensors of the manufacturing systems; the sensors may sense different states of the manufacturing workflow and/or properties of the manufactured good and/or properties of the consumed components and materials; For example, the monitoring unit may be a program module receiving monitoring data from a plurality of cameras acting as sensors and being positioned along the production line;
- a materials requirements planning system, wherein the materials requirements planning system comprises a database, an application program and a processor.

The processor of the materials requirements planning system is configured to:
- continuously receive the monitoring data as input and to store the monitoring data in the database;
- receive an instruction to perform a task of controlling the production, the procurement and/or the distribution of one or more of the materials and components used for producing the plurality of goods;
- identifying a plurality of sub-tasks within the task, wherein each of the plurality of sub-tasks is associated with one of the materials or components;
- for each of the plurality of sub-tasks:
   ∘ accessing a data structure associated with the sub-task, the data structure indicating a plurality of property values assigned to the sub-task;
   ∘ determining whether each property value of the plurality of property values is implemented in the database; and
   ∘ when each property value of the plurality of property values is implemented in the database, performing the sub-task in the database for generating a sub-task result, thereby using the monitoring data as input, and returning the sub-task result to the application program;
   ∘ when one or more property values of the plurality of property values is not implemented in the database, performing the sub-task in the application program.

In addition, the automated manufacturing system comprises an automated ordering system that is configured to use the one or more of the generated sub-task results as input for automatically or semi-automatically ordering the materials and components that need to be replenished.

Said features may be advantageous for multiple reasons: many state of the art materials requirements planning systems (MRPSs) use comparatively slow general purpose databases due to the heterogeneity of the database queries generated by said systems. As the planning of materials requirements often required to aggregate huge amounts of data by means of OLAP queries as well as to execute procedural, sequential queries that are based on a linear scanning and reading of data (OLTP queries), neither purely OLAP nor purely OLTP optimized databases performed well for all queries of current MRPSs.

Other state of the art approaches which are based on dynamically evaluating database queries and their parameters to dispatch the query either to an OLTP optimized database or to an OLAP optimized copy of said database consume comparatively much processing power during the analysis of the query and are difficult to develop and maintain as a parser for the database queries has to be written which is a complex task in particular if the database queries are very complex. For very complex queries comprising multiple table joins the dispatcher might not be able to correctly identify in which one of the database copies the query should be processed. In addition, maintaining a hybrid database increases the time and effort requiring for maintaining the data and requires additional hardware resources. By assigning property values to individual sub-tasks and by evaluating said properties for determining if a sub-task shall be executed in the database or by the application program, the decision to which target a sub-task should be dispatched is facilitated and calculated more quickly.

A property value may be a particular data value stored in a cell of a database table. A property value may be a value stored in a database column that represents said property. For example, a column "supply-type" may comprise, in one or more respective copies, four different property values: a) "own production", b) "supplier-with-supply-contract-type-I", c) "supplier-with-supply-contract-type-II" or d) "supplier-with-supply-contract-type-III". Another column "size_of_lots" may comprise, in one or more respective copies, five different property values "1", "100", "1000", "10.000" and "50.000". A mapping may assign each of said property values to a sub-task. Multiple different property values may be assigned to the same sub-task. For example, property value a) "own production" may be mapped to a first sub-task and property values b)-d) "supplier-with-supply-contract-type-I-III" may be mapped to a second sub-task. If a property-value is not mapped to any sub-task, it is considered as not being implemented by the database.

In a further beneficial aspect, the invention may facilitate modifying the dispatching strategy. For example, a dispatcher module main comprise or be able to dynamically retrieve a white list of property values which are implemented in the database. For example, the dispatcher module may have stored said white list internally or may be able to query said white-list of property values from the database. The dispatcher module may then compare each property value of each of the identified sub-tasks with the property values of the white list. If the matching returns that a particular compared property value matches (e.g., is identical) with a property value of the white list, said property value is considered to be implemented by the database. If all property values assigned to a sub-task are determined to be contained in said white list, the sub-task is dispatched to the database for execution by database-internal routines. If one or more of the property values do not match, the respective sub-task is executed by the application program. This may be advantageous as application programs are well suited for executing procedural program routines sequentially. The system can quickly and fully automatically identify those kinds of sub-tasks which can be executed highly efficiently in the database and to selectively dispatch those sub-tasks to the database. Other sub-tasks which may, for example, be of procedural nature may comprise one or more property values which are not implemented by the database. By executing said kind of sub-task directly by the application program, it is ensured that said query does not reduce the overall performance of the MRPS.

According to embodiments, the MRPS is connected to and integrated in an ERP ("Enterprise Resource Planning System").

The data structure associated with the sub-task may be, for example, a configuration file or a runtime data object written in a program language such as ABAP, Java or C++.

In a further aspect, the invention relates to a materials requirements planning system comprising a database, an application program and a processor. The processor is configured for:
- continuously receiving the monitoring data as input and storing the monitoring data in the database, the monitoring data comprising an amount and type of a plurality of materials and components consumed by a production line;
- receiving an instruction to perform a task of controlling the production, procurement and/or distribution of one or more of the materials and components to be used by the production line for producing a plurality of goods; For example, some of the materials or components may have to be produced by the production line as intermediate product in order to produce the plurality of final goods; the materials and components may have to be ordered from a supplier and distributed to the individual components of the production line at the right time.

- identifying a plurality of sub-tasks within the task, wherein each of the plurality of sub-tasks is associated with one of the materials or components;
- for each of the plurality of sub-tasks:
   ∘ accessing a data structure associated with the sub-task, the data structure indicating a plurality of property values assigned to the sub-task;
   ∘ determining whether each property value of the plurality of property values is implemented in the database; and
   ∘ when each property value of the plurality of property values is implemented in the database, performing the sub-task in the database for generating a sub-task result, thereby using the monitoring data as input; and
   ∘ when one or more property values of the plurality of property values is not implemented in the database, performing the sub-task by the application program.

According to embodiments, performing the sub-task in the database comprises:
- selectively grouping one or more of the sub-tasks whose property values are all implemented in the database into one or more bundles of sub-tasks, wherein all sub-tasks grouped into one of said bundles having associated the same material or component; and
- performing execution of sub-tasks in the database in a bundlewise manner, thereby generating one bundled result per sub-task bundle, wherein the sub-task results of the sub-tasks of said bundle are aggregated for calculating the one bundled result.

According to embodiments the database is structured or 'optimized' such that if a plurality of sub-tasks is executed as bundle, the processing time of each individual sub-task is shorter than if executed individually in the database. For example, a single select query may be used for reading data stored in two or more columns of one or more database tables rather than executing an individual select query per table column (property) of interest. Said features may be advantageous as they may allow using some database systems such as HANA more efficiently: each sub-task may correspond and trigger the execution of one or more database queries. By executing bundles of sub-tasks rather than individual sub-tasks, the computational overhead per individual database query and per individual sub-task is reduced.

According to embodiments the database is an in-memory database, e.g. HANA.

According to embodiments the database is optimized for executing aggregating database operations, e.g. group-by operations and/or OLAP database queries. A database optimized for executing aggretating database operations may be, for example, an OLAP database.

According to embodiments, those ones of the sub-tasks which are of procedural nature have assigned at least one property value that is not implemented in the database. Sub-tasks being of procedural nature may for example be sub-tasks which cannot be parallelized in multiple threads but rather have to be executed in a single thread and/or may be sub-tasks which require input data from external applications. Procedural sub-task may receive multiple intermediate results and input data sequentially and may therefore not be suited for parallel execution. Those ones of the sub-tasks which can be executed in multiple threads in parallel, and/or which implement or trigger the execution of an aggregating function, have respectively assigned property values that are all implemented by the database.

According to embodiments, the materials requirements planning system comprises an interface for receiving the task over a network. The accessing of the data structure and the determination whether each property value of the plurality of property values is implemented in the database is executed by a dispatcher module of the materials requirements planning system.

The dispatcher module is configured to trigger the performing of each of the sub-tasks in the database if each property value of the plurality of property values of said sub-task is implemented in the database, and otherwise trigger the performing of said sub-task by the application program.

According to some embodiments, the dispatcher module is part of the application program.

According to other embodiments, the dispatcher module is part of the database management system of the database. In this case, the identified sub-tasks are forwarded from the application program (having received the request) to the dispatcher module of the database. The dispatcher module will selectively identify those dispatched sub-tasks having assigned at least one property value that is not implemented by the database. The dispatcher will return said identified sub-tasks to the application program. The application program will execute the returned sub-tasks. The other sub-tasks having assigned only property values that are implemented in the database are executed by the database directly. In cases where it is assumed that most sub-tasks can be processed by the database itself, the dispatcher module is preferentially part of the database management system. This may be advantageous, as only a small fraction of the sub-task may have to be returned to the application program. In cases where it is assumed that most sub-tasks cannot be processed by the database itself, the dispatcher module is preferentially part of the application program. This may be advantageous, as only a small fraction of the sub-task may have to be transferred to the database. Thus, unnecessary data transfers between application program and database are avoided and performance is increased.

The interface for receiving the task is free of any reference to one of the properties or property values. This may be advantageous as the decision if the sub-task is executed in the database or not is transparent to a client. Thus, the client does not have to take measures to ensure that the tasks or sub-tasks are executed by a system component that is capable of efficiently processing the respective database queries.

According to embodiments, the processor of the materials requirements planning system is further configured for:
- for each of the bundles whose sub-tasks have assigned one of the components, identifying a component material of said component;
- accessing a data structure associated with the component material, the data structure indicating a plurality of property values assigned to the component material;
- determining that each property value of the plurality of property values assigned to the component material is implemented in the database; and
- if each property value of the plurality of property values assigned to the component material is implemented in the database, processing the component material in the database;
- otherwise, processing the component material in the application program.

According to embodiments, the processor of the materials requirements planning system is further configured for:
- identifying all sub-tasks of the task whose assigned property values are all implemented in the database but that that have not been grouped into one of the one or more groups of sub-tasks;
- processing each of said identified sub-tasks by the application program rather than in the database, wherein the application program generates a sub-task result for each of said sub-tasks; and
- combining the one or more bundled results generated in the database with the sub-task results of processing the sub-task by the application program.

It may be advantageous to execute a sub-task in the application layer even in case the database implements said sub-task in case the sub-task and its related database queries cannot be grouped and thus have a high computational overhead. In these cases, it has been determined that it is more efficient to execute said individual sub-tasks in the application program.

According to embodiments, at least some of the components consist of one or more levels of sub-components. The processor of the materials requirements planning system is further configured for:
- traversing the one or more levels for identifying, for each of the levels and for each of the sub-components, a respective further sub-tasks, wherein each of said identified further sub-tasks is associated with one of the sub-components;
- at each of said levels and for each of the further sub-tasks:
   - accessing a data structure associated with the further sub-task, the data structure indicating a further plurality of property values assigned to said further sub-task;
   - determining whether each property value of the further plurality of property values is implemented in the database; and
   - when each property value of the further plurality of property values is implemented in the database, performing the further sub-task in the database for generating a further sub-task result, thereby using the monitoring data as input; and
   - when one or more property values of the further plurality of property values is not implemented in the database, performing the further sub-task by the application program;
   - after having processed all further sub-tasks of a current one of said levels, calculating a combined result from the further sub-task results returned by the database and/or the application program.

This may be advantageous as an efficient way of executing a drill-down analysis is provided which allows for a reliable materials planning even in cases where the individual components consist one or more levels of sub-components.

According to embodiments, a property value implemented in the database is a property value that is mapped in the database to one or more stored procedures of said database. Executing a sub-task in the database comprises identifying, by database dispatcher module, one or more stored procedures mapped to any one of the property values assigned to said sub-task; and selectively executing the one or more identified stored procedures by the database.

The stored procedures may comprise, for example, complex table joins, the generation of views and/or of aggregate result values. Said features may be advantageous as stored procedure are known to perform particularly efficient compared to a situation when said calculations are executed by an application program in a sequential/procedural manner.

In a further aspect, the invention relates to a method of planning a materials requirement of an automated manufacturing system by a materials requirements planning system, the materials requirements planning system comprising a database, an application program and a processor for executing the method. The method comprises:
- continuously receiving monitoring data as input and storing the monitoring data in the database, the monitoring data comprising an amount and type of a plurality of materials and components consumed by a production line of the automated manufacturing system;
- receiving an instruction to perform a task of controlling the production, procurement and/or distribution of one or more of the materials and components to be used by the production line for producing a plurality of goods;
- identifying a plurality of sub-tasks within the task, wherein each of the plurality of sub-tasks is associated with one of the materials or components;
- for each of the plurality of sub-tasks:
   - accessing a data structure associated with the sub-task, the data structure indicating a plurality of property values assigned to the sub-task;
   - determining whether each property value of the plurality of property values is implemented in the database; and
   - when each property value of the plurality of property values is implemented in the database, performing the sub-task in the database for generating a sub-task result, thereby using the monitoring data as input; and
   - when one or more property values of the plurality of property values is not implemented in the database, performing the sub-task by the application program.

According to embodiments, the method is implemented by a materials requirements planning system according to any one of the previous embodiments.

The application program may be able to interoperate with the database. The application program may provide the functionality of the MRPS in interoperation with the database. The database may have the task of persisting the monitoring data and the generated results and to provide some program logic, e.g. some stored procedures, to make the execution of some sub-tasks more efficient.

According to some embodiments, the database includes stored procedure functionality, which allows both the retrieval and processing of data to be performed in the database. Stored procedures often provide enhanced performance over similar application program functionality, but can be more difficult to develop, test, and deploy.

According to embodiments, sub-tasks which trigger one or more procedural database query, e.g. Online Transaction Processing (OLTP) sub-tasks, have assigned at least one property value that is not implemented by the database. As a consequence, said types of sub-tasks are executed by the application program, not by stored procedures of the database. The application program may execute some SELECT database queries to retrieve the data, e.g. the monitoring data, from the database, and will then process the retrieved data in a procedural way. Such procedural sub-tasks and database queries can relate to the creation of sales orders, invoices, or the processing of sales orders or customer accounts.

Procedural queries might not perform as well as aggregating queries and/or analytical queries when executed by the database if said database is optimized for aggregating queries, e.g. OLAP queries. By automatically, reliably and quickly identifying procedural sub-tasks by means of the property values, it is possible to use a database that is highly performant for executing aggregating database queries, to dispatch selectively the non-procedural, aggregating sub-tasks and their database queries to said database for execution and to selectively execute procedural sub-tasks by the application program. Aggregating, non-procedural sub-tasks and their queries may be, for example, Online Analytical Processing (OLAP) queries. Said sub-tasks may relate to reporting, quality control, analyzing history data, trend prediction and process optimization. A database optimized for processing aggregating, analytical queries, e.g. OLAP databases, may have a different data structure, comprise different indices and data storage schemes. Existing database systems such as SAP HANA able to perform aggregating and analytical queries very efficiently. Procedural queries will not benefit as much of said structure as do aggregating functions and might in some cases even reduce performance. Therefore executing said procedural queries in the application program directly will reduce computational overhead as the processing of said sub-tasks is done by the application program itself.

However, for any kind of query-type-optimized database system, there will usually exist some other kinds of database queries that, if performed on said database, may slow down the overall performance of the database system or may at least not benefit to the same extent from the structure of said database as do queries for which said database system was optimized.

According to embodiments, for each of the property values that is implemented by the database, a respective index exists in the database that can be used for executing a quick search on said index for any property value of said property. Said property might correspond to a column of a table in the database. In this cases, the application program may retrieve the whole content of a table rather than slowly searching for a particular property value, and will than process the retrieved data.

This may be advantageous, because if for a particular property assigned to a sub-task no index exists on the respective column in said database, the corresponding database query will probably be executed comparatively slow and should be avoided or dispatched for execution to the application program.

### Brief description of the drawings

In the following embodiments of the invention are explained in greater detail, by way of example only, making reference to the drawings in which:
- FIG. 1: is a network diagram illustrating a network environment suitable for dispatching database tasks, according to some example embodiments.
- FIG. 2: shows a block diagram of a server machine according to an embodiment.
- FIGS. 3-7: are flowcharts illustrating operations of devices performing various methods of dispatching database tasks, according to some example embodiments.
- FIG. 8: is a block diagram illustrating components of a machine, according to some example embodiments.
- FIG. 9: is a block diagram of a manufacturing system of an embodiment.

### Detailed description

Example methods and systems are directed to dispatching tasks to a database. Examples merely typify possible variations. Unless explicitly stated otherwise, components and functions are optional and may be combined or subdivided, and operations may vary in sequence or be combined or subdivided. In the following description, for purposes of explanation, numerous specific details are set forth to provide a thorough understanding of example embodiments. It will be evident to one skilled in the art, however, that the present subject matter may be practiced without these specific details.

In some example embodiments, an application accesses data associated with a task. The data may indicate property values, also referred to as 'features' that will be used to complete the task. The application may determine whether all such property values are implemented in the database. In some example embodiments, the application dispatches the task to the database if all property values are implemented therein. In some example embodiments, the application performs the task in the application program if one or more of the property values are not available in the database.

In some example embodiments, the task involves materials requirements planning. Such a task may include determining, for a given bill of materials ("BOM"), the quantity of materials available on-hand, the quantity available from suppliers, the transport or delivery time for the various quantities, and other data regarding the BOM. Additionally, some materials may themselves have component materials. For example, a company may manufacture computers from component parts. In this case, the company may have a number of completed computers on hand, as well as a number of each component part on hand. The company may also have information regarding the ability of its suppliers to provide the component parts. In some example embodiments, the task involves determining, for a given plant or set of plants, information regarding some or all products that are produced at those plants. Each of those products may have an associated BOM.

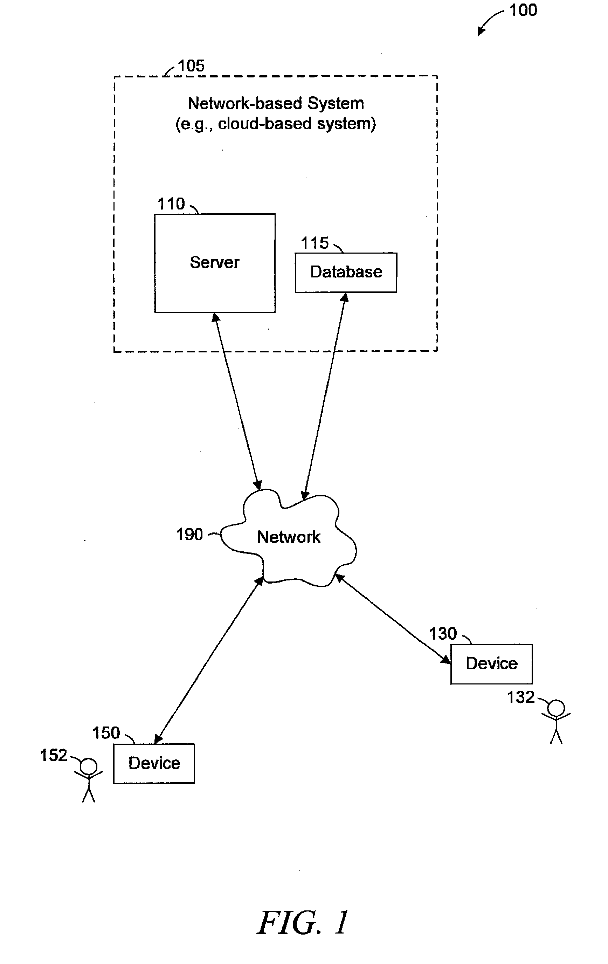

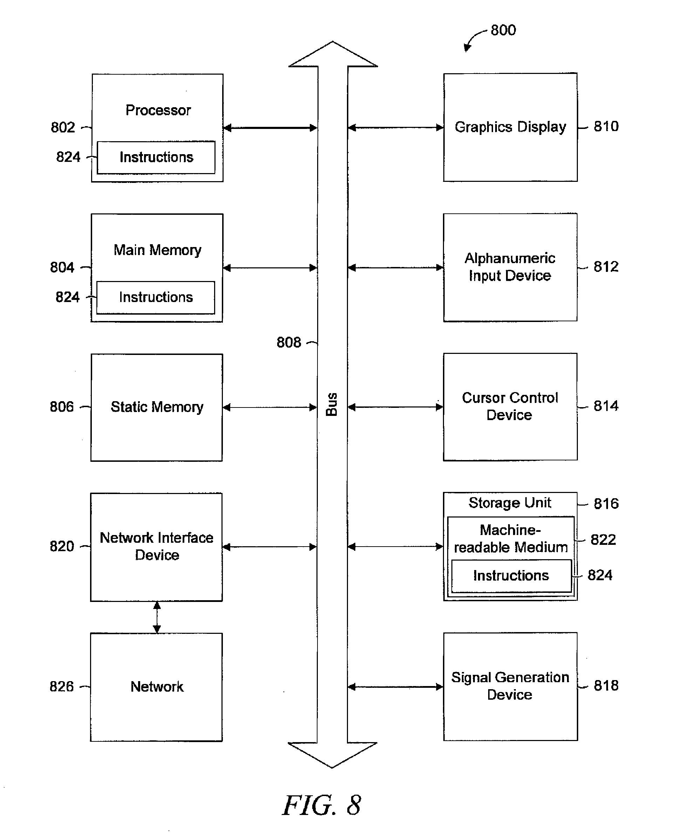

FIG. 1 is a network diagram illustrating a network environment 100 suitable for dispatching database tasks, according to some example embodiments. The network environment 100 includes a server machine 110, a database 115, and devices 130 and 150, all communicatively coupled to each other via a network 190. The server machine 110 and the database 115 may collectively comprise a cloud-based system 105 capable of responding to client requests from devices 130 and 150. The server machine 110 may host an application capable of dispatching tasks to the database 115. The server machine 110 and the devices 130 and 150 may each be implemented in a computer system, in whole or in part, as described below with respect to FIG. 8.

Also shown in FIG. 1 are users 132 and 152. One or both of the users 132 and 152 may be a human user (e.g., a human being), a machine user (e.g., a computer configured by a software program to interact with the device 130), or any suitable combination thereof (e.g., a human assisted by a machine or a machine supervised by a human). The user 132 is not part of the network environment 100, but is associated with the device 130 and may be a user of the device 130. For example, the device 130 may be a desktop computer, a vehicle computer, a tablet computer, a navigational device, a portable media device, or a smart phone belonging to the user 132. Likewise, the user 152 is not part of the network environment 100, but is associated with the device 150. As an example, the device 150 may be a desktop computer, a vehicle computer, a tablet computer, a navigational device, a portable media device, or a smart phone belonging to the user 152.

Any of the machines, databases, or devices shown in FIG. 1 may be implemented in a general-purpose computer modified (e.g., configured or programmed) by software to be a special-purpose computer to perform the functions described herein for that machine, database, or device. For example, a computer system able to implement any one or more of the methodologies described herein is discussed below with respect to FIG. 8. As used herein, a "database" is a data storage resource, in particular a relational database (e.g., an object-relational database), a triple store, a hierarchical data store, or any suitable combination thereof. The database may be an in-memory database. The in-memory database may be capable of much higher performance than a disk-based database. Moreover, any two or more of the machines, databases, or devices illustrated in FIG. 1 may be combined into a single machine, and the functions described herein for any single machine, database, or device may be subdivided among multiple machines, databases, or devices.

The network 190 may be any network that enables communication between or among machines, databases, and devices (e.g., the server machine 110 and the device 130). Accordingly, the network 190 may be a wired network, a wireless network (e.g., a mobile or cellular network), or any suitable combination thereof. The network 190 may include one or more portions that constitute a private network, a public network (e.g., the Internet), or any suitable combination thereof.

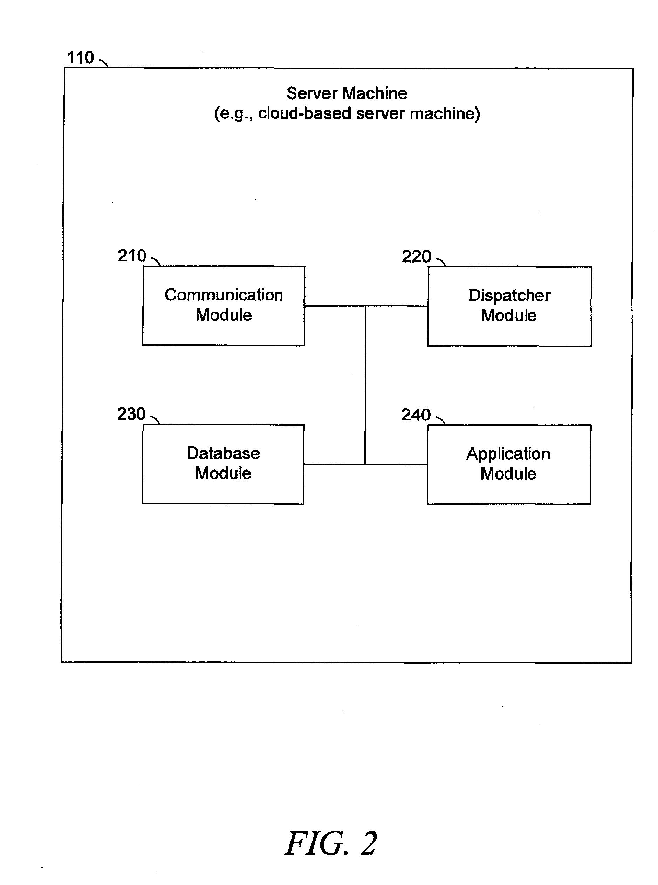

FIG. 2 is a block diagram illustrating components of the server machine 110, according to some example embodiments. The server machine 110 is shown as including a communication module 210, a dispatcher module 220, a database module 230, and an application module 240, all configured to communicate with each other (e.g., via a bus, shared memory, or a switch). Any one or more of the modules described herein may be implemented using hardware (e.g., a processor of a machine) or a combination of hardware and software. For example, any module described herein may configure a processor to perform the operations described herein for that module. Moreover, any two or more of these modules may be combined into a single module, and the functions described herein for a single module may be subdivided among multiple modules. Furthermore, according to various example embodiments, modules described herein as being implemented within a single machine, database, or device may be distributed across multiple machines, databases, or devices.

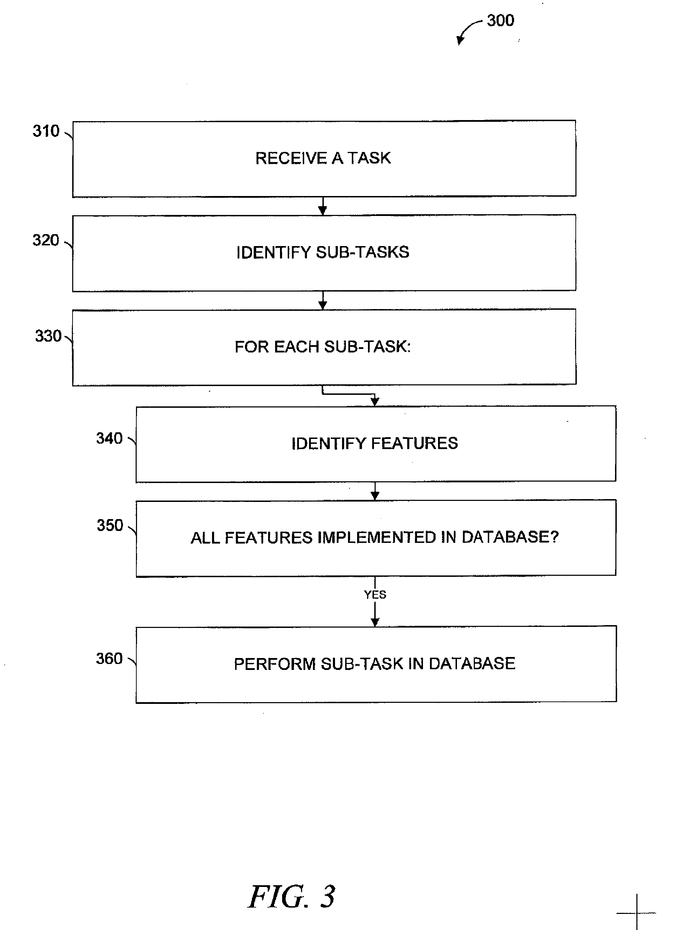

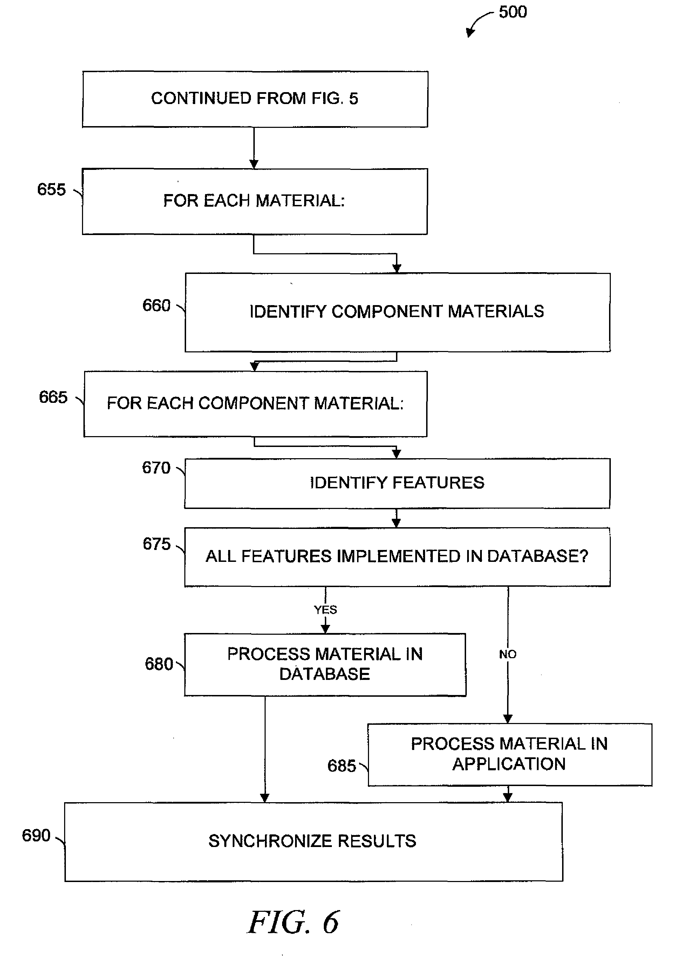

As discussed in more detail below with respect to FIGS. 3-6, the communication module 210 may receive a task from a user. The dispatcher module 220 may then analyze the task to determine if all property values to be used in processing the task are available in the database. If all such property values are available, the database module 230 may perform the task in the database. If any such property values are not available, the application module 240 may perform the task in the application.

FIG. 3 is a flowchart illustrating operations of the device 110 in performing a method 300 of dispatching database tasks, according to some example embodiments. Operations in the method 300 may be performed by the device 110, using modules described above with respect to FIG. 2. As shown in FIG. 3, the method 300 includes operations 310, 320, 330, 340, 350, and 360.

In operation 310, the communication module 210 receives an instruction to perform a task. In some example embodiments, the task is a materials requirements processing ("MRP") task (e.g., a simulative task, an operative task, or both). The result of an MRP task may be a recommendation to produce materials, to procure materials, to distribute materials, or any suitable combination thereof. In some example embodiments, the MRP task is associated with a BOM. The BOM may include multiple component materials used in the product described by the BOM.

In operation 320, the dispatcher module 220 identifies one or more sub-tasks within the task. In some example embodiments, the sub-task is an MRP task associated with a component material in a BOM. For example, if the task is to determine how many computers can be produced in the next month, the BOM may indicate the components of the computer, and the sub-tasks may include determining how many of each component is available.

In operation 330, the dispatcher module 220 begins a loop to process each of the identified sub-tasks. Accordingly, operations 340, 350, and 360 may be performed for each identified sub-task.

In operation 340, the dispatcher module 220 identifies the property values associated with the sub-task. For example, the material associated with the sub-task may be processed in fixed lot sizes or in variable lot sizes. As another example, a material may indicate that a substitute material can be used in its place. In other example embodiments, a material may indicate that a plurality of materials, together, can act as a substitute material. Any or all of these may be property values.

In operation 350, the dispatcher module 220 determines if the identified property values are implemented in the database. This may be accomplished by querying the database, checking against a known set of property values, or both.

In some example embodiments, each property value corresponds to a stored procedure, or a set of stored procedures, in the database. Each stored procedure may support multiple property values. In some example embodiments, all property values of a task (e.g., a sub-task, a material, or both) must be implemented in the database in order for the database to be able to perform the task. In some example embodiments, when all property values of the task are implemented in the database, the performance of the database in performing the task is improved. In some example embodiments, the implementation of property values in the database does not necessarily correspond to functionality or performance, but reflects a user or administrator setting.

In operation 360, the dispatcher module 220 dispatches the sub-task to the database if all identified property values were found to be implemented in the database. After receiving the sub-task, database module 230 may perform the sub-task in the database. In some example embodiments, the dispatcher module 220 dispatches the sub-task to the application program if any of the identified property values were not found to be implemented in the database. After receiving the sub-task, application module 240 may perform the sub-task in the application program.

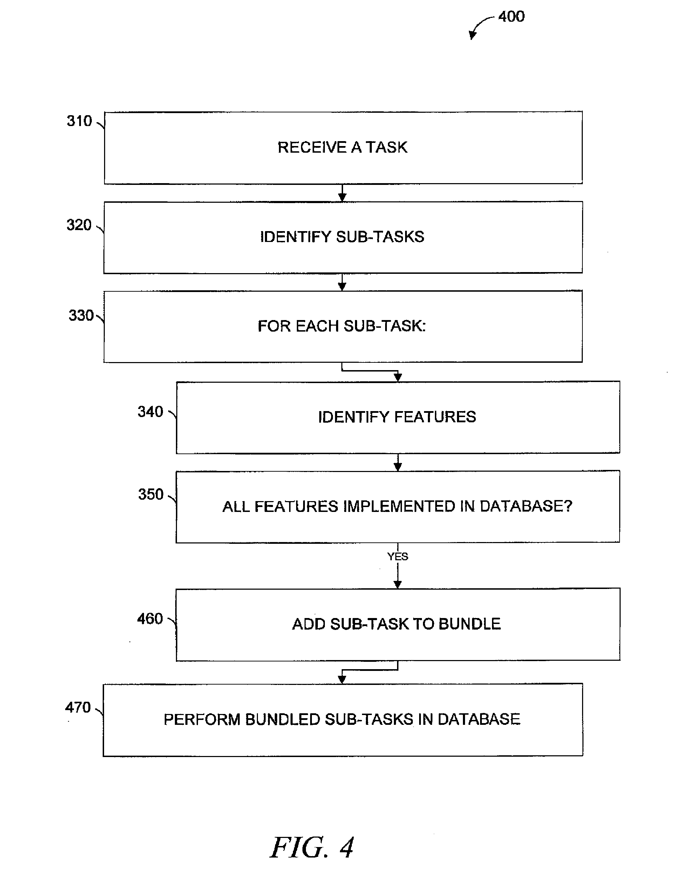

FIG. 4 is a flowchart illustrating operations of the device 110 in performing a method 400 of dispatching database tasks, according to some example embodiments. Operations in the method 400 may be performed by the device 110, using modules described above with respect to FIG. 2. As shown in FIG. 4, the method 400 includes operations 310, 320, 330, 340, 350, 460, and 470.

Operations 310, 320, 330, 340, and 350 are described above with respect to FIG. 3.

In operation 460, the dispatcher module 220 adds the sub-task to a bundle of sub-tasks if all identified property values were found to be implemented in the database. In some example embodiments, the dispatcher module 220 adds the sub-task to a separate bundle of sub-tasks if one or more of the identified property values were found to not be implemented in the database.

In operation 470, the dispatcher module 220 dispatches the bundle of sub-tasks for which all identified property values were found to be implemented in the database to the database module 230. After receiving the bundle, database module 230 may perform the bundled sub-tasks in the database. In some example embodiments, the dispatcher module 220 dispatches the bundle of sub-tasks for which at least one identified property value was found not to be implemented in the database to the application module 240. After receiving the bundle, application module 240 may perform the bundled sub-tasks in the application program.

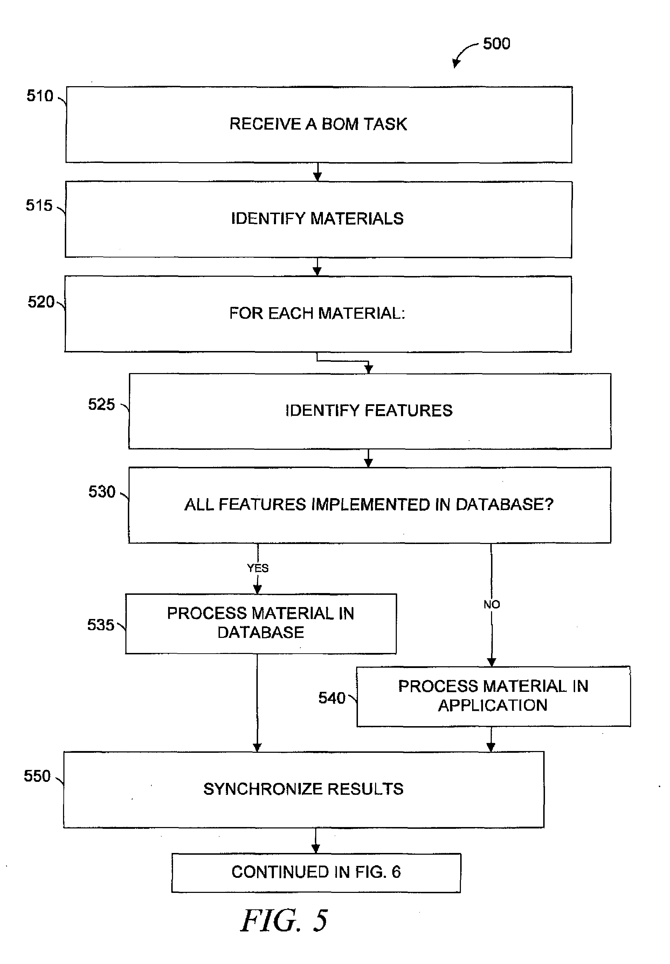

FIGS. 5-6 are flowcharts illustrating operations of the device 110 in performing a method 500 of dispatching database tasks, according to some example embodiments. Operations in the method 500 may be performed by the device 110, using modules described above with respect to FIG. 2. As shown in FIGS. 5-6, the method 500 includes operations 510, 515, 520, 525, 530, 535, 540, 550, 655, 660, 665, 670, 675, 680, 685, and 690.

In operation 510, the communication module 210 receives an instruction to perform a task related to a BOM. The result of the task may be a recommendation to produce materials, to procure materials, to distribute materials, or any suitable combination thereof. The BOM may include multiple component materials used in the product described by the BOM.

In operation 515, the dispatcher module 220 identifies one or more materials associated with the BOM.

In operation 520, the dispatcher module 220 begins a loop to process each of the identified materials. Accordingly, operations 525, 530, and one of operations 535 and 540 may be performed for each identified material.

In operation 525, the dispatcher module 220 identifies the property values associated with the material. For example, the property values may indicate that the material may be processed in fixed lot sizes or in variable lot sizes. As another example, the property values of a material may indicate that a substitute material can be used in its place. In other example embodiments, the property values of a material may indicate that a plurality of materials, together, can act as a substitute material.

In operation 530, the dispatcher module 220 determines if the identified property values are implemented in the database. This may be accomplished by querying the database, checking against a known set of property values, or both.

In operation 535, the dispatcher module 220 dispatches the material to the database if all identified property values were found to be implemented in the database. After receiving the sub-task, database module 230 may process the material in the database.

In operation 540, the dispatcher module 220 dispatches the material to the application program if one or more of the identified property values was found to not be implemented in the database. After receiving the sub-task, application module 240 may process the material in the application program.

In operation 550, the dispatcher module 220 combines, i.e., synchronizes, the results from processing the identified materials. In some example embodiments, the dispatcher module 220 waits until the processing of all identified materials is complete.

In operation 655, the dispatcher module 220 begins a loop to process each of the identified materials. Accordingly, operation 660 may be performed for each identified material.

In operation 660, the dispatcher module 220 identifies the component materials of the material. For example, if the BOM refers to a computer, one of the identified materials may be the chassis. The chassis may be built from components such as a keyboard, a universal serial bus ("USB") port, and a high-definition multimedia interface ("HDMI") port. In this example, these components are the component materials of the chassis material.

In operation 665, the dispatcher module 220 begins a loop to process each of the identified component materials. Accordingly, operations 670, 675, and one of operations 680 and 685 may be performed for each identified component material.

In operation 670, the dispatcher module 220 identifies the property values associated with the component material. For example, the material may be processed in fixed lot sizes or in variable lot sizes. As another example, a material may indicate that a substitute material can be used in its place. In other example embodiments, a material may indicate that a plurality of materials, together, can act as a substitute material. Any or all of these may be property values.

In operation 675, the dispatcher module 220 determines if the identified property values are implemented in the database. This may be accomplished by querying the database, checking against a known set of property values, or both.

In operation 680, the dispatcher module 220 dispatches the material to the database program if all identified property values were found to be implemented in the database. After receiving the sub-task, database module 230 may process the material in the database.

In operation 685, the dispatcher module 220 dispatches the material to the application program if one or more of the identified property values was found to not be implemented in the database. After receiving the sub-task, application module 240 may process the material in the application program.

In operation 690, the dispatcher module 220 combines the results from processing the identified materials. In some example embodiments, the dispatcher module 220 waits until the processing of all identified materials is complete.

In some example embodiments, the component materials identified in operation 660 may themselves have component materials. In these example embodiments, steps 655-690 may be repeated to process the additional level of component materials. This process may be repeated at lower and lower levels until all component materials have been processed.

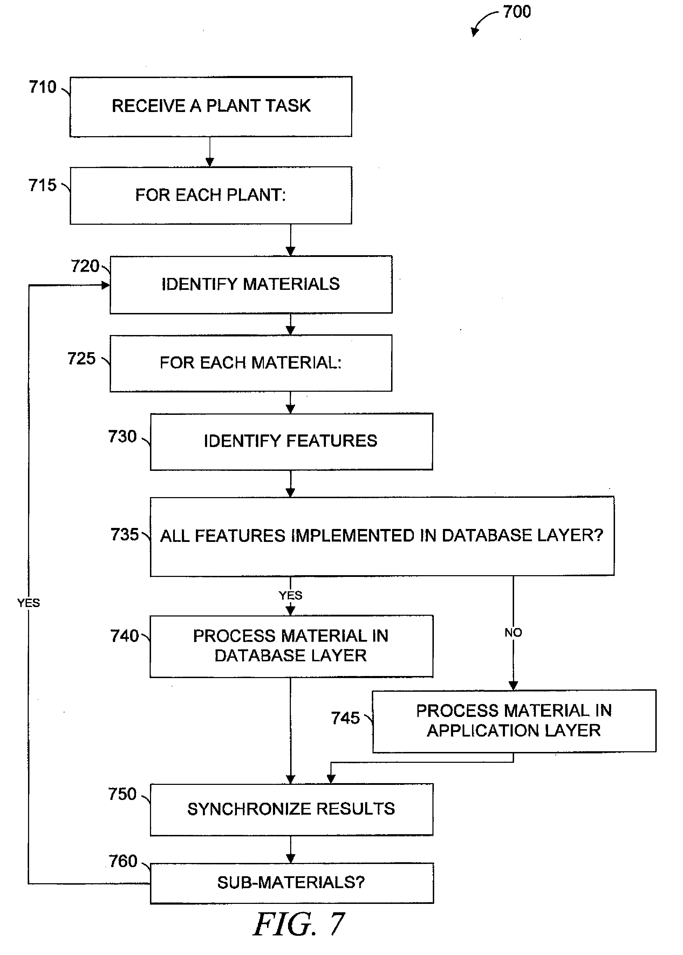

FIG. 7 is a flowchart illustrating operations of the device 110 in performing a method 700 of dispatching database tasks, according to some example embodiments. Operations in the method 700 may be performed by the device 110, using modules described above with respect to FIG. 2. As shown in FIG. 7, the method 700 includes operations 710, 715, 720, 725, 730, 735, 740, 745, 750, and 760.

In operation 710, the communication module 210 receives an instruction to perform a task plan all materials within one or several plants. The result of the task may be a recommendation to produce materials, to procure materials, to distribute materials, or any suitable combination thereof. Each material may have an associated BOM. The BOM may include multiple component materials used in the product described by the BOM.

In operation 715, the dispatcher module 220 begins a loop to process each of the identified plants. Accordingly, one or more of operations 720, 725, 730, 735, 740, 745, 750, and 760 may be performed for each plant.

In operation 720, the dispatcher module 220 identifies one or more materials associated with the plant.

In operation 725, the dispatcher module 220 begins a loop to process each of the identified materials. Accordingly, operations 725, 730, and one of operations 735 and 740 may be performed for each identified material.

In operation 730, the dispatcher module 220 identifies the property values associated with the material. For example, the material may be processed in fixed lot sizes or in variable lot sizes. As another example, a material may indicate that a substitute material can be used in its place. In other example embodiments, a material may indicate that a plurality of materials, together, can act as a substitute material. Any or all of these may be property values.

In operation 735, the dispatcher module 220 determines if the identified property values are implemented in the database. This may be accomplished by querying the database, checking against a known set of property values, or both.

In operation 740, the dispatcher module 220 dispatches the material to the database if all identified property values were found to be implemented in the database. After receiving the sub-task, database module 230 may process the material in the database.

In operation 745, the dispatcher module 220 dispatches the material to the application program if one or more of the identified property values was found to not be implemented in the database. After receiving the sub-task, application module 240 may process the material in the application program.

In operation 750, the dispatcher module 220 combines the results from processing the identified materials. In some example embodiments, the dispatcher module 220 waits until the processing of all identified materials is complete.

In operation 760, the dispatcher module 220 begins to loop and to plan the next level of BOM in order to plan the complete structure and all related materials for the plant. For example, if the BOM refers to a computer, one of the identified materials may be the chassis. The chassis may be built from components such as a keyboard, a universal serial bus ("USB") port, and a high-definition multimedia interface ("HDMI") port. In this example, these components are the component materials of the chassis material. Thus, in this example, the dispatcher module 220 would loop back to operation 720, which would identify the component materials of the keyboard, USB port, and HDMI port and continue processing those materials. In some example embodiments, these lower-level materials would themselves have component materials, in which case the dispatcher module 220 may start another loop when operation 760 is reached at the lower level. This process of repeatedly looping with lower and lower level components may continue until all fundamental materials (e.g., materials that do not have component materials) are processed.

According to various example embodiments, one or more of the methodologies described herein may facilitate dispatching of tasks to a database upon the condition that the database is capable of performing the tasks while allowing the task to be performed in the application program upon the condition that the database is incapable of performing the task. Moreover, one or more of the methodologies described herein may facilitate the use of a higher-speed database solution when one is available. According to various example embodiments, dispatching the task based on the implementation of property values in the database may allow a user to submit tasks without being concerned about whether the task will ultimately be performed in the database or in the application program, saving the user time. According to various example embodiments, one or more of the methodologies described herein may allow application developers to implement general-purpose solutions in the application program and only provide database support for the most frequently-used property values, maximizing the impact of development efforts.

When these effects are considered in aggregate, one or more of the methodologies described herein may obviate a need for certain efforts or resources that otherwise would be involved in dispatching tasks. Computing resources used by one or more machines, databases, or devices (e.g., within the network environment 100) may similarly be reduced. Examples of such computing resources include processor cycles, network traffic, memory usage, data storage capacity, power consumption, and cooling capacity.

FIG. 8 is a block diagram illustrating components of a machine 800, according to some example embodiments, able to read instructions from a machine-readable medium (e.g., a machine-readable storage medium, a computer-readable storage medium, or any suitable combination thereof) and perform any one or more of the methodologies discussed herein, in whole or in part. Specifically, FIG. 8 shows a diagrammatic representation of the machine 800 in the example form of a computer system and within which instructions 824 (e.g., software, a program, an application, an applet, an app, or other executable code) for causing the machine 800 to perform any one or more of the methodologies discussed herein may be executed, in whole or in part. In alternative embodiments, the machine 800 operates as a standalone device or may be connected (e.g., networked) to other machines. In a networked deployment, the machine 800 may operate in the capacity of a server machine or a client machine in a server-client network environment, or as a peer machine in a distributed (e.g., peer-to-peer) network environment. The machine 800 may be a server computer, a client computer, a personal computer (PC), a tablet computer, a laptop computer, a netbook, a set-top box (STB), a personal digital assistant (PDA), a cellular telephone, a smartphone, a web appliance, a network router, a network switch, a network bridge, or any machine capable of executing the instructions 824, sequentially or otherwise, that specify actions to be taken by that machine. Further, while only a single machine is illustrated, the term "machine" shall also be taken to include a collection of machines that individually or jointly execute the instructions 824 to perform all or part of any one or more of the methodologies discussed herein.

The machine 800 includes a processor 802 (e.g., a central processing unit (CPU), a graphics processing unit (GPU), a digital signal processor (DSP), an application specific integrated circuit (ASIC), a radio-frequency integrated circuit (RFIC), or any suitable combination thereof), a main memory 804, and a static memory 806, which are configured to communicate with each other via a bus 808. The machine 800 may further include a graphics display 810 (e.g., a plasma display panel (PDP), a light emitting diode (LED) display, a liquid crystal display (LCD), a projector, or a cathode ray tube (CRT)). The machine 800 may also include an alphanumeric input device 812 (e.g., a keyboard), a cursor control device 814 (e.g., a mouse, a touch-pad, a trackball, a joystick, a motion sensor, or other pointing instrument), a storage unit 816, a signal generation device 818 (e.g., a speaker), and a network interface device 820.

The storage unit 816 includes a machine-readable medium 822 on which is stored the instructions 824 embodying any one or more of the methodologies or functions described herein. The instructions 824 may also reside, completely or at least partially, within the main memory 804, within the processor 802 (e.g., within the processor's cache memory), or both, during execution thereof by the machine 800. Accordingly, the main memory 804 and the processor 802 may be considered as machine-readable media. The instructions 824 may be transmitted or received over a network 826 (e.g., network 190) via the network interface device 820.

As used herein, the term "memory" refers to a machine-readable medium able to store data temporarily or permanently and may be taken to include, but not be limited to, random-access memory (RAM), read-only memory (ROM), buffer memory, flash memory, and cache memory. While the machine-readable medium 822 is shown in an example embodiment to be a single medium, the term "machine-readable medium" should be taken to include a single medium or multiple media (e.g., a centralized or distributed database, or associated caches and servers) able to store instructions. The term "machine-readable medium" shall also be taken to include any medium, or combination of multiple media, that is capable of storing instructions for execution by a machine (e.g., machine 800), such that the instructions, when executed by one or more processors of the machine (e.g., processor 802), cause the machine to perform any one or more of the methodologies described herein. Accordingly, a "machine-readable medium" refers to a single storage apparatus or device, as well as "cloud-based" storage systems or storage networks that include multiple storage apparatus or devices. The term "machine-readable medium" shall accordingly be taken to include, but not be limited to, one or more data repositories in the form of a solid-state memory, an optical medium, a magnetic medium, or any suitable combination thereof.

Throughout this specification, plural instances may implement components, operations, or structures described as a single instance. Although individual operations of one or more methods are illustrated and described as separate operations, one or more of the individual operations may be performed concurrently, and nothing requires that the operations be performed in the order illustrated. Structures and functionality presented as separate components in example configurations may be implemented as a combined structure or component. Similarly, structures and functionality presented as a single component may be implemented as separate components. These and other variations, modifications, additions, and improvements fall within the scope of the subject matter herein.

Certain embodiments are described herein as including logic or a number of components, modules, or mechanisms. Modules may constitute either software modules (e.g., code embodied on a machine-readable medium or in a transmission signal) or hardware modules. A "hardware module" is a tangible unit capable of performing certain operations and may be configured or arranged in a certain physical manner. In various example embodiments, one or more computer systems (e.g., a standalone computer system, a client computer system, or a server computer system) or one or more hardware modules of a computer system (e.g., a processor or a group of processors) may be configured by software (e.g., an application or application portion) as a hardware module that operates to perform certain operations as described herein.

In some embodiments, a hardware module may be implemented mechanically, electronically, or any suitable combination thereof. For example, a hardware module may include dedicated circuitry or logic that is permanently configured to perform certain operations. For example, a hardware module may be a special-purpose processor, such as a field programmable gate array (FPGA) or an ASIC. A hardware module may also include programmable logic or circuitry that is temporarily configured by software to perform certain operations. For example, a hardware module may include software encompassed within a general-purpose processor or other programmable processor. It will be appreciated that the decision to implement a hardware module mechanically, in dedicated and permanently configured circuitry, or in temporarily configured circuitry (e.g., configured by software) may be driven by cost and time considerations.

Accordingly, the phrase "hardware module" should be understood to encompass a tangible entity, be that an entity that is physically constructed, permanently configured (e.g., hardwired), or temporarily configured (e.g., programmed) to operate in a certain manner or to perform certain operations described herein. As used herein, "hardware-implemented module" refers to a hardware module. Considering embodiments in which hardware modules are temporarily configured (e.g., programmed), each of the hardware modules need not be configured or instantiated at any one instance in time. For example, where a hardware module comprises a general-purpose processor configured by software to become a special-purpose processor, the general-purpose processor may be configured as respectively different special-purpose processors (e.g., comprising different hardware modules) at different times. Software may accordingly configure a processor, for example, to constitute a particular hardware module at one instance of time and to constitute a different hardware module at a different instance of time.

Hardware modules can provide information to, and receive information from, other hardware modules. Accordingly, the described hardware modules may be regarded as being communicatively coupled. Where multiple hardware modules exist contemporaneously, communications may be achieved through signal transmission (e.g., over appropriate circuits and buses) between or among two or more of the hardware modules. In embodiments in which multiple hardware modules are configured or instantiated at different times, communications between such hardware modules may be achieved, for example, through the storage and retrieval of information in memory structures to which the multiple hardware modules have access. For example, one hardware module may perform an operation and store the output of that operation in a memory device to which it is communicatively coupled. A further hardware module may then, at a later time, access the memory device to retrieve and process the stored output. Hardware modules may also initiate communications with input or output devices, and can operate on a resource (e.g., a collection of information).

The various operations of example methods described herein may be performed, at least partially, by one or more processors that are temporarily configured (e.g., by software) or permanently configured to perform the relevant operations. Whether temporarily or permanently configured, such processors may constitute processor-implemented modules that operate to perform one or more operations or functions described herein. As used herein, "processor-implemented module" refers to a hardware module implemented using one or more processors.

Similarly, the methods described herein may be at least partially processor-implemented, a processor being an example of hardware. For example, at least some of the operations of a method may be performed by one or more processors or processor-implemented modules. Moreover, the one or more processors may also operate to support performance of the relevant operations in a "cloud computing" environment or as a "software as a service" (SaaS). For example, at least some of the operations may be performed by a group of computers (as examples of machines including processors), with these operations being accessible via a network (e.g., the Internet) and via one or more appropriate interfaces (e.g., an application program interface (API)).

The performance of certain of the operations may be distributed among the one or more processors, not only residing within a single machine, but deployed across a number of machines. In some example embodiments, the one or more processors or processor-implemented modules may be located in a single geographic location (e.g., within a home environment, an office environment, or a server farm). In other example embodiments, the one or more processors or processor-implemented modules may be distributed across a number of geographic locations.

Some portions of the subject matter discussed herein may be presented in terms of algorithms or symbolic representations of operations on data stored as bits or binary digital signals within a machine memory (e.g., a computer memory). Such algorithms or symbolic representations are examples of techniques used by those of ordinary skill in the data processing arts to convey the substance of their work to others skilled in the art. As used herein, an "algorithm" is a self-consistent sequence of operations or similar processing leading to a desired result. In this context, algorithms and operations involve physical manipulation of physical quantities. Typically, but not necessarily, such quantities may take the form of electrical, magnetic, or optical signals capable of being stored, accessed, transferred, combined, compared, or otherwise manipulated by a machine. It is convenient at times, principally for reasons of common usage, to refer to such signals using words such as "data," "content," "bits," "values," "elements," "symbols," "characters," "terms," "numbers," "numerals," or the like. These words, however, are merely convenient labels and are to be associated with appropriate physical quantities.

Unless specifically stated otherwise, discussions herein using words such as "processing," "computing," "calculating," "determining," "presenting," "displaying," or the like may refer to actions or processes of a machine (e.g., a computer) that manipulates or transforms data represented as physical (e.g., electronic, magnetic, or optical) quantities within one or more memories (e.g., volatile memory, non-volatile memory, or any suitable combination thereof), registers, or other machine components that receive, store, transmit, or display information. Furthermore, unless specifically stated otherwise, the terms "a" or "an" are herein used, as is common in patent documents, to include one or more than one instance. Finally, as used herein, the conjunction "or" refers to a non-exclusive "or," unless specifically stated otherwise.

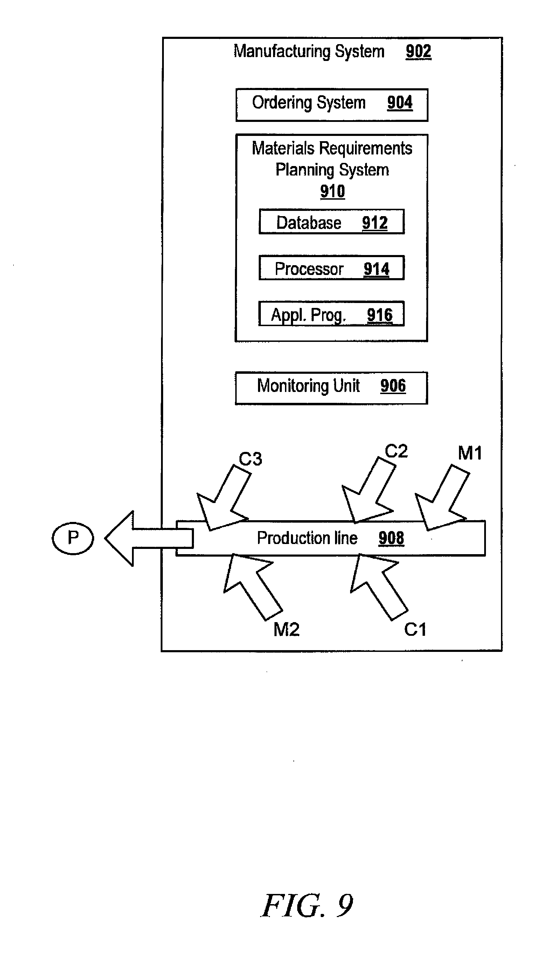

FIG. 9 is a block diagram of an automated manufacturing system 902 comprising:
a production line 908 that is configured to automatically produce a plurality of goods P. The production line may receive, at different stages of the production process, a plurality of materials M1, M2 and components C1, C2, C3 that are processed and/or assembled for producing the goods. The system 902 further comprises a monitoring unit 906 configured to continuously generate monitoring data and a materials requirements planning system 910 according to one of the above described embodiments. The requirements planning system 910 comprises a database 912, an application program 916 and a processor 914 that interact with each other es described previously. The manufacturing system 902 further comprises an automated ordering system 904 which uses the calculated results of the materials requirements planning system as input for automatically or semi-automatically ordering the materials and components that need to be replenished.

## Claims

1. An automated manufacturing system (902), comprising:
- a production line (908) configured to automatically produce a plurality of goods (P) from a plurality of materials (M1, M2) and components (C1, C2, C3);
- a monitoring unit (906) configured to repeatedly generate monitoring data, the monitoring data comprising the amount and type of the materials and components consumed by the production line;
- a materials requirements planning system (910), wherein the materials requirements planning system comprises a database (115, 912), an application program (240, 916) and a processor (914), the processor being configured for:
∘ repeatedly receiving the monitoring data as input and storing the monitoring data in the database;
∘ receiving an instruction to perform a task of controlling the production, procurement and/or distribution of one or more of the materials and components;
∘ identifying a plurality of sub-tasks within the task, wherein each of the plurality of sub-tasks is associated with one of the materials or components;
∘ for each of the plurality of sub-tasks:
• accessing a data structure associated with the sub-task, the data structure indicating a plurality of property values assigned to the sub-task;
• determining whether each property value of the plurality of property values is implemented in the database, wherein a property value implemented in the database is a property value that is mapped in the database to one or more stored procedures of said database; and
• when each property value of the plurality of property values of the sub-task is implemented in the database, performing the sub-task in the database for generating a sub-task result, thereby using the monitoring data as input, and returning the sub-task result to the application program, wherein executing a sub-task in the database comprises identifying, by a database dispatcher module, one or more stored procedures mapped to any one of the property values assigned to said sub-task; and executing the one or more identified stored procedures by the database;
• when one or more property values of the plurality of property values are not implemented in the database, performing the sub-task in the application program (240, 916); and
- an automated ordering system (904) using one or more of the generated sub-task results as input for automatically or semi-automatically ordering the materials and components that need to be replenished.

2. A materials requirements planning system (910) comprising a database (115, 912), an application program (240, 916) and a processor (914), the processor being configured for:
- repeatedly receiving monitoring data as input and storing the monitoring data in the database, the monitoring data comprising an amount and type of a plurality of materials and components consumed by a production line;
- receiving an instruction to perform a task of controlling the production, procurement and/or distribution of one or more of the materials and components;
- identifying a plurality of sub-tasks within the task, wherein each of the plurality of sub-tasks is associated with one of the materials or components;
- for each of the plurality of sub-tasks:
• accessing a data structure associated with the sub-task, the data structure indicating a plurality of property values assigned to the sub-task;
• determining whether each property value of the plurality of property values is implemented in the database, wherein a property value implemented in the database is a property value that is mapped in the database to one or more stored procedures of said database; and
• when each property value of the plurality of property values of the sub-task is implemented in the database, performing the sub-task in the database for generating a sub-task result, thereby using the monitoring data as input, wherein executing a sub-task in the database comprises identifying, by a database dispatcher module, one or more stored procedures mapped to any one of the property values assigned to said sub-task; and executing the one or more identified stored procedures by the database; and
• when one or more property values of the plurality of property values are not implemented in the database, performing the sub-task by the application program (240, 916).

3. The materials requirements planning system of claim 2, wherein the performing the sub-task in the database comprises:
• selectively grouping one or more of the sub-tasks whose property values are all implemented in the database into one or more bundles of sub-tasks, wherein all sub-tasks grouped into one of said bundles have associated the same material or component; and
• performing execution of sub-tasks in the database in a bundlewise manner, thereby generating one bundled result per sub-task bundle, wherein the sub-task results of the sub-tasks of said bundle are aggregated for calculating the one bundled result.

4. The materials requirements planning system of any one of the previous claims 2-3, wherein the database (115, 912) is an in-memory database.

5. The materials requirements planning system of any one of the previous claims 2-4, wherein the database (115, 912) is optimized for executing aggregating database operations.

6. The materials requirements planning system of any one of the previous claims 2-5, wherein the database (115, 912) is structured such that if a plurality of sub-tasks is executed as bundle, the processing time of each individual sub-task is shorter than if executed individually in the database.

7. The materials requirements planning system of any one of the previous claims 2-6,
- wherein sub-tasks which are of procedural nature have assigned at least one property value that is not implemented in the database; and
- wherein sub-tasks which can be executed in multiple threads in parallel, and/or sub-tasks which implement or trigger the execution of an aggregating function, have assigned property values that are all implemented by the database.

8. The materials requirements planning system of any one of the previous claims 2-7,
- wherein the materials requirements planning system comprises an interface for receiving the task over a network,
- wherein the determination whether each property value of the plurality of property values is implemented in the database is executed by a dispatcher module of the materials requirements planning system, the dispatcher module being configured to trigger the performing of each of the sub-tasks in the database if each property value of the plurality of property values of said sub-task is implemented in the database, and otherwise to trigger the performing of said sub-task by the application program; and
- wherein said interface is free of any reference to one of the property values.

9. The materials requirements planning system of any one of the previous claims 3-8, wherein the processor is further configured for:
- for each of the bundles whose sub-tasks have assigned one of the components, identifying a component material of said component;
- accessing a data structure associated with the component material, the data structure indicating a plurality of property values assigned to the component material;
- determining that each property value of the plurality of property values assigned to the component material is implemented in the database; and
- when each property value of the plurality of property values assigned to the component material is implemented in the database, processing the component material in the database;
- otherwise, processing the component material in the application program.

10. The materials requirements planning system of any one of the previous claims 3-9, wherein the processor is further configured for:
- identifying all sub-tasks having assigned property values that are all implemented in the database but that have not been grouped into one of the one or more groups of sub-tasks by the grouping step;
- processing each of said identified sub-tasks by the application program rather than in the database, wherein the application program generates a sub-task result for each of said sub-tasks; and
- combining the one or more bundled results generated in the database with the sub-task results of processing the sub-task by the application program.

11. The materials requirements planning system of any one of the previous claims 2-10, wherein at least some of the components consist of one or more levels of sub-components and wherein the processor is further configured for:
- Traversing the one or more levels for identifying, for each of the levels and for each of the sub-components, a respective further sub-tasks, wherein each of said identified further sub-tasks is associated with one of the sub-components;
- at each of said levels and for each of the further sub-tasks:
• accessing a data structure associated with the further sub-task, the data structure indicating a further plurality of property values assigned to said further sub-task;
• determining whether each property value of the further plurality of property values is implemented in the database; and
• when each property value of the further plurality of property values is implemented in the database, performing the further sub-task in the database for generating a further sub-task result, thereby using the monitoring data as input; and
• when one or more property values of the further plurality of property values are not implemented in the database, performing the further sub-task by the application program (240, 916);
• after having processed all further sub-tasks of a current one of said levels, calculating a combined result from the further sub-task results returned by the database and/or the application program.

12. A method of planning a materials requirements of an automated manufacturing system by a materials requirements planning system, the materials requirements planning system comprising a database (115, 912), an application program (240, 916) and a processor (914) for executing the method, the method comprising:
- repeatedly receiving monitoring data as input and storing the monitoring data in the database, the monitoring data comprising an amount and type of a plurality of materials and components consumed by a production line of the automated manufacturing system for producing a plurality of goods;
- receiving an instruction to perform a task of controlling the production, procurement and/or distribution of one or more of the materials and components;
- identifying a plurality of sub-tasks within the task, wherein each of the plurality of sub-tasks is associated with one of the materials or components;
- for each of the plurality of sub-tasks:
• accessing a data structure associated with the sub-task, the data structure indicating a plurality of property values assigned to the sub-task;
• determining whether each property value of the plurality of property values is implemented in the database, wherein a property value implemented in the database is a property value that is mapped in the database to one or more stored procedures of said database; and
• when each property value of the plurality of property values of the sub-task is implemented in the database, performing the sub-task in the database for generating a sub-task result, thereby using the monitoring data as input, wherein executing a sub-task in the database comprises identifying, by a database dispatcher module, one or more stored procedures mapped to any one of the property values assigned to said sub-task; and executing the one or more identified stored procedures by the database; and
• when one or more property values of the plurality of property values are not implemented in the database, performing the sub-task by the application program (240, 916).

13. The method of claim 12 being implemented by a materials requirements planning system of any one of the previous claims 2-11.

## Patentansprüche

1. Automatisiertes Produktionssystem (902), umfassend:
- eine Produktionsanlage (908), die zur automatischen Produktion mehrerer Produkte (P) aus mehreren Stoffen (M1, M2) und Komponenten (C1, C2, C3) konfiguriert ist,
- eine Überwachungseinheit (906), die zum wiederholten Erzeugen von Überwachungsdaten konfiguriert ist, wobei die Überwachungsdaten die Menge und den Typ der von der Produktionsanlage verbrauchten Stoffe und Komponenten umfassen,
- ein Planungssystem für benötigte Ausgangsstoffe (910), wobei das Planungssystem für benötigte Ausgangsstoffe eine Datenbank (115, 912), ein Anwendungsprogramm (240, 916) und einen Prozessor (914) umfasst, wobei der Prozessor konfiguriert ist zum:
∘ wiederholten Empfangen der Überwachungsdaten als Eingabe und Speichern der Überwachungsdaten in der Datenbank,
∘ Empfangen einer Anweisung zum Durchführen einer Aufgabe zum Steuern der Produktion, der Beschaffung und/oder der Verteilung von einem oder mehr der Stoffe und Komponenten,
∘ Identifizieren von mehreren Teilaufgaben innerhalb der Aufgabe, wobei jede der mehreren Teilaufgaben einem der Stoffe oder einer der Komponenten zugeordnet ist,
∘ für jede der mehreren Teilaufgaben:
• Zugreifen auf eine der Teilaufgabe zugeordnete Datenstruktur, wobei die Datenstruktur mehrere der Teilaufgabe zugeordnete Eigenschaftswerte anzeigt,
• Ermitteln, ob jeder Eigenschaftswert der mehreren Eigenschaftswerte in der Datenbank implementiert ist, wobei ein in der Datenbank implementierter Eigenschaftswert ein Eigenschaftswert ist, der in der Datenbank auf einen oder mehr gespeicherte Abläufe der genannten Datenbank abgebildet ist, und,
• wenn jeder Eigenschaftswert der mehreren Eigenschaftswerte der Teilaufgabe in der Datenbank implementiert ist, Durchführen der Teilaufgabe in der Datenbank zum Erzeugen eines Teilaufgabenergebnisses, wobei dabei die Überwachungsdaten als Eingabe verwendet werden, und Zurücksenden des Teilaufgabenergebnisses an das Anwendungsprogramm, wobei das Ausführen einer Teilaufgabe in der Datenbank das Identifizieren von einem oder mehr gespeicherten Abläufen, die auf irgendeinen der der genannten Teilaufgabe zugeordneten Eigenschaftswerte abgebildet sind, durch ein Datenbank-Dispatchermodul und Ausführen des einen oder der mehr identifizierten gespeicherten Abläufe durch die Datenbank umfasst,
• wenn ein oder mehr Eigenschaftswerte der mehreren Eigenschaftswerte nicht in der Datenbank implementiert sind, Durchführen der Teilaufgabe im Anwendungsprogramm (240, 916) und
- ein automatisiertes Bestellsystem (904), das eines oder mehr der erzeugten Teilaufgabenergebnisse als Eingabe zur automatischen oder semiautomatischen Bestellung der Stoffe und Komponenten, die aufgestockt werden müssen, verwendet.

2. Planungssystem für benötigte Ausgangsstoffe (910), umfassend eine Datenbank (115, 912), ein Anwendungsprogramm (240, 916)und einen Prozessor (914), wobei der Prozessor konfiguriert ist zum:
- wiederholten Empfangen von Überwachungsdaten als Eingabe und Speichern der Überwachungsdaten in der Datenbank, wobei die Überwachungsdaten eine Menge und einen Typ von mehreren von einer Produktionsanlage verbrauchten Stoffen und Komponenten umfassen,
- Empfangen einer Anweisung zum Durchführen einer Aufgabe zum Steuern der Produktion, der Beschaffung und/oder der Verteilung von einem oder mehr der Stoffe und Komponenten,
- Identifizieren von mehreren Teilaufgaben innerhalb der Aufgabe, wobei jede der mehreren Teilaufgaben einem der Stoffe oder einer der Komponenten zugeordnet ist,
- für jede der mehreren Teilaufgaben:
• Zugreifen auf eine der Teilaufgabe zugeordnete Datenstruktur, wobei die Datenstruktur mehrere der Teilaufgabe zugeordnete Eigenschaftswerte anzeigt,
• Ermitteln, ob jeder Eigenschaftswert der mehreren Eigenschaftswerte in der Datenbank implementiert ist, wobei ein in der Datenbank implementierter Eigenschaftswert ein Eigenschaftswert ist, der in der Datenbank auf einen oder mehr gespeicherte Abläufe der genannten Datenbank abgebildet ist, und,
• wenn jeder Eigenschaftswert der mehreren Eigenschaftswerte der Teilaufgabe in der Datenbank implementiert ist, Durchführen der Teilaufgabe in der Datenbank zum Erzeugen eines Teilaufgabenergebnisses, wobei dabei die Überwachungsdaten als Eingabe verwendet werden, wobei das Ausführen einer Teilaufgabe in der Datenbank das Identifizieren von einem oder mehr gespeicherten Abläufen, die auf irgendeinen der der genannten Teilaufgabe zugeordneten Eigenschaftswerte abgebildet sind, durch ein Datenbank-Dispatchermodul und Ausführen des einen oder der mehr identifizierten gespeicherten Abläufe durch die Datenbank umfasst, und,
• wenn ein oder mehr Eigenschaftswerte der mehreren Eigenschaftswerte nicht in der Datenbank implementiert sind, Durchführen der Teilaufgabe durch das Anwendungsprogramm (240, 916).

3. Planungssystem für benötigte Ausgangsstoffe nach Anspruch 2, wobei das Durchführen der Teilaufgabe in der Datenbank umfasst:
• selektives Gruppieren von einer oder mehr der Teilaufgaben, deren Eigenschaftswerte alle in der Datenbank implementiert sind, in ein oder mehr Teilaufgabenbündel, wobei allen in eines der genannten Bündel gruppierten Teilaufgaben das gleiche Material oder die gleiche Komponente zugeordnet ist, und
• bündelweises Durchführen der Ausführung von Teilaufgaben in der Datenbank, wobei dabei pro Teilaufgabenbündel ein gebündeltes Ergebnis erzeugt wird, wobei die Teilaufgabenergebnisse der Teilaufgaben des genannten Bündels zur Berechnung des einen gebündelten Ergebnisses aggregiert werden.

4. Planungssystem für benötigte Ausgangsstoffe nach einem der vorhergehenden Ansprüche 2 bis 3, wobei die Datenbank (115, 912) eine speicherinterne Datenbank ist.

5. Planungssystem für benötigte Ausgangsstoffe nach einem der vorhergehenden Ansprüche 2 bis 4, wobei die Datenbank (115, 912) zur Ausführung des Aggregierens von Datenbankvorgängen optimiert ist.

6. Planungssystem für benötigte Ausgangsstoffe nach einem der vorhergehenden Ansprüche 2 bis 5, wobei die Datenbank (115, 912) so strukturiert ist, dass, wenn mehrere Teilaufgaben als Bündel ausgeführt werden, die Verarbeitungszeit jeder einzelnen Teilaufgabe kürzer ist als wenn sie in der Datenbank einzeln ausgeführt wird.

7. Planungssystem für benötigte Ausgangsstoffe nach einem der vorhergehenden Ansprüche 2 bis 6,
- wobei Teilaufgaben, die prozeduraler Art sind, wenigstens ein Eigenschaftswert zugeordnet ist, der nicht in der Datenbank implementiert ist, und
- wobei Teilaufgaben, die in multiplen Threads parallel ausgeführt werden können, und/oder Teilaufgaben, welche die Ausführung einer Aggregationsfunktion implementieren oder auslösen, Eigenschaftswerte zugeordnet sind, die alle von der Datenbank implementiert sind.

8. Planungssystem für benötigte Ausgangsstoffe nach einem der vorhergehenden Ansprüche 2 bis 7,
- wobei das Planungssystem für benötigte Ausgangsstoffe eine Schnittstelle zum Erhalten der Aufgabe über ein Netzwerk aufweist,
- wobei die Ermittlung, ob jeder Eigenschaftswert der mehreren Eigenschaftswerte, der in der Datenbank implementiert ist, von einem Dispatchermodul des Planungssystems für benötigte Ausgangsstoffe ausgeführt wird, wobei das Dispatchermodul konfiguriert ist zum Auslösen der Durchführung von jeder der Teilaufgaben in der Datenbank, wenn jeder Eigenschaftswert der mehreren Eigenschaftswerte der genannten Teilaufgabe in der Datenbank implementiert ist, und ansonsten zum Auslösen der Durchführung der genannten Teilaufgabe durch das Anwendungsprogramm, und
- wobei die genannte Schnittstelle frei von jedwedem Bezug auf einen der Eigenschaftswerte ist.

9. Planungssystem für benötigte Ausgangsstoffe nach einem der vorhergehenden Ansprüche 3 bis 8, wobei der Prozessor ferner konfiguriert ist zum:
- Identifizieren eines Komponentenstoffs der genannten Komponente für jedes der Bündel, deren Teilaufgaben eine der Komponenten zugeordnet sind,
- Zugreifen auf eine dem Komponentenstoff zugeordnete Datenstruktur, wobei die Datenstruktur mehrere dem Komponentenstoff zugeordnete Eigenschaftswerte anzeigt,
- Ermitteln, dass jeder dem Komponentenstoff zugeordnete Eigenschaftswert der mehreren Eigenschaftswerte in der Datenbank implementiert ist, und,
- wenn jeder dem Komponentenstoff zugeordnete Eigenschaftswert der mehreren Eigenschaftswerte in der Datenbank implementiert ist, Verarbeiten des Komponentenstoffs in der Datenbank,
- ansonsten Verarbeiten des Komponentenstoffs im Anwendungsprogramm.

10. Planungssystem für benötigte Ausgangsstoffe nach einem der vorhergehenden Ansprüche 3 bis 9, wobei der Prozessor ferner konfiguriert ist zum:
- Identifizieren aller Teilaufgaben, denen Eigenschaftswerte zugeordnet sind, die alle in der Datenbank implementiert sind, die aber nicht durch den Gruppierungsschritt in die eine der einen oder mehr Teilaufgabengruppen gruppiert wurden,
- Verarbeiten jeder der genannten identifizierten Teilaufgaben durch das Anwendungsprogramm anstatt in der Datenbank, wobei das Anwendungsprogramm für jede der genannten Teilaufgaben ein Teilaufgabenergebnis erzeugt, und
- Vereinigen des einen oder der mehr gebündelten, in der Datenbank erzeugten Ergebnisse mit den Teilaufgabenergebnissen der Verarbeitung der Teilaufgabe durch das Anwendungsprogramm.

11. Planungssystem für benötigte Ausgangsstoffe nach einem der vorhergehenden Ansprüche 2 bis 10, wobei wenigstens einige der Komponenten aus einer oder mehr Ebenen von Teilkomponenten bestehen und wobei der Prozessor ferner konfiguriert ist zum:
- Durchqueren der einen oder mehr Ebenen zum Identifizieren, für jede der Ebenen und für jede der Teilkomponenten, einer jeweiligen weiteren Teilaufgabe, wobei jede der genannten weiteren Teilaufgaben einer der Teilkomponenten zugeordnet ist,
- auf jeder der genannten Ebenen und für jede der weiteren Teilaufgaben:
• Zugreifen auf eine der weiteren Teilaufgabe zugeordnete Datenstruktur, wobei die Datenstruktur weitere mehrere, der genannten weiteren Teilaufgabe zugeordnete Eigenschaftswerte anzeigt,
• Ermitteln, ob jeder Eigenschaftswert der weiteren mehreren Eigenschaftswerte in der Datenbank implementiert ist, und,
• wenn jeder Eigenschaftswert der weiteren mehreren Eigenschaftswerte in der Datenbank implementiert ist, Durchführen der weiteren Teilaufgabe in der Datenbank zum Erzeugen eines weiteren Teilaufgabenergebnisses, wobei dabei die Überwachungsdaten als Eingabe verwendet werden, und,
• wenn ein oder mehr Eigenschaftswerte der weiteren mehreren Eigenschaftswerte nicht in der Datenbank implementiert sind, Durchführen der weiteren Teilaufgabe durch das Anwendungsprogramm (240, 916),
• nach der Verarbeitung aller weiteren Teilaufgaben einer aktuellen der genannten Ebenen Berechnen eines vereinigten Ergebnisses anhand der von der Datenbank und/oder dem Anwendungsprogramm zurückgesendeten weiteren Teilaufgabenergebnisse.

12. Verfahren zum Planen benötigter Ausgangsstoffe eines automatisierten Produktionssystems durch ein Planungssystem für benötigte Ausgangsstoffe, wobei das Planungssystem für benötigte Ausgangsstoffe eine Datenbank (115, 912), ein Anwendungsprogramm (240, 916) und einen Prozessor (914) zum Ausführen des Verfahrens umfasst, wobei das Verfahren umfasst:
- wiederholtes Empfangen von Überwachungsdaten als Eingabe und Speichern der Überwachungsdaten in der Datenbank,wobei die Überwachungsdaten eine Menge und einen Typ von mehreren von einer Produktionsanlage des automatisierten Produktionssystems zur Produktion von mehreren Produkten verbrauchten Stoffen und Komponenten umfassen,
- Empfangen einer Anweisung zum Durchführen einer Aufgabe zum Steuern der Produktion, der Beschaffung und/oder der Verteilung von einem oder mehr der Stoffe und Komponenten,
- Identifizieren von mehreren Teilaufgaben innerhalb der Aufgabe, wobei jede der mehreren Teilaufgaben einem der Stoffe oder einer der Komponenten zugeordnet ist,
- für jede der mehreren Teilaufgaben:
• Zugreifen auf eine der Teilaufgabe zugeordnete Datenstruktur, wobei die Datenstruktur mehrere der Teilaufgabe zugeordnete Eigenschaftswerte anzeigt,
• Ermitteln, ob jeder Eigenschaftswert der mehreren Eigenschaftswerte in der Datenbank implementiert ist, wobei ein in der Datenbank implementierter Eigenschaftswert ein Eigenschaftswert ist, der in der Datenbank auf einen oder mehr gespeicherte Abläufe der genannten Datenbank abgebildet ist, und,
• wenn jeder Eigenschaftswert der mehreren Eigenschaftswerte der Teilaufgabe in der Datenbank implementiert ist, Durchführen der Teilaufgabe in der Datenbank zum Erzeugen eines Teilaufgabenergebnisses, wobei dabei die Überwachungsdaten als Eingabe verwendet werden, wobei das Ausführen einer Teilaufgabe in der Datenbank das Identifizieren von einem oder mehr gespeicherten Abläufen, die auf irgendeinen der der genannten Teilaufgabe zugeordneten Eigenschaftswerte abgebildet sind, durch ein Datenbank-Dispatchermodul und Ausführen des einen oder der mehr identifizierten gespeicherten Abläufe durch die Datenbank umfasst, und,
• wenn ein oder mehr Eigenschaftswerte der mehreren Eigenschaftswerte nicht in der Datenbank implementiert sind, Durchführen der Teilaufgabe durch das Anwendungsprogramm (240, 916).

13. Verfahren nach Anspruch 12, das von einem Planungssystem für benötigte Ausgangsstoffe nach einem der vorhergehenden Ansprüche 2 bis 11 implementiert wird.

## Revendications

1. Système de fabrication automatisé (902), comprenant :
- une ligne de production (908) configurée pour produire de manière automatique une pluralité de biens (P) à partir d'une pluralité de matériaux (M1, M2) et de composants (C1, C2, C3) ;
- une unité de surveillance (906) configurée pour générer à maintes reprises des données de surveillance, les données de surveillance comprenant le nombre et le type des matériaux et des composants consommés par la ligne de production ;
- un système de planification des besoins en matériaux (910), dans lequel le système de planification des besoins en matériaux comprend une base de données (115,912), un programme d'application (240,916) et un processeur (914), le processeur étant configuré pour :
∘ recevoir à maintes reprises en entrée les données de surveillance et enregistrer les données de surveillance dans la base de données ;
∘ recevoir une instruction pour effectuer une tâche de contrôle de la production, de l'approvisionnement et/ou de la distribution de l'un ou de plusieurs parmi les matériaux et les composants ;
∘ identifier une pluralité de sous-tâches dans la tâche, dans laquelle chacune des pluralités des sous-tâches est associée à l'un des matériaux ou des composants ;
∘ pour chacune des pluralités des sous-tâches :
▪ accéder à la structure des données associée à la sous-tâche, la structure des données étant l'indication d'une pluralité de valeurs de la propriété attribuée à la sous-tâche ;
▪ déterminer si chaque valeur de la propriété parmi la pluralité des valeurs de la propriété est mise en oeuvre dans la base de données, dans laquelle une valeur de la propriété mise en oeuvre dans la base de données est une valeur de la propriété qui est reportée dans la base de données dans une ou à plusieurs procédures enregistrées de ladite base de données ; et
▪ lorsque chacune parmi les valeurs de la propriété de la pluralité des valeurs de la propriété de la sous-tâche est mise en oeuvre dans la base de données, effectuer la sous-tâche dans la base de données pour générer un résultat de la sous-tâche, en utilisant ainsi les données de surveillance comme entrée, et en renvoyant le résultat de la sous-tâche vers le programme d'application, dans lequel l'exécution de la sous-tâche dans la base de données comprend l'identification, par un module de répartition de la base de données, de l'une ou de plusieurs procédures enregistrées associées à chacune des valeurs de la propriété attribuée à ladite sous-tâche ; et l'exécution de la ou de plusieurs procédures enregistrées identifiées par la base de données ;
▪ lorsque l'une ou plusieurs parmi les valeurs de la pluralité des valeurs de la propriété ne sont pas mises en oeuvre dans la base de données, effectuer la sous-tâche dans le programme de l'application (240, 916) ; et
- un système de commande automatisé (904) utilisant l'un ou plusieurs parmi les résultats de la sous-tâche générée comme entrée pour commander de manière automatique ou semi-automatique les matériaux et les composants qui ont besoin d'être réapprovisionnés.

2. Système de planification des besoins en matériaux (910) comprenant une base de données (115, 912), un programme d'application (240, 916) et un processeur (914), le processeur étant configuré pour :
- recevoir à maintes reprises en entrée les données de surveillance et enregistrer les données de surveillance dans la base de données, les données de surveillance comprenant le nombre et le type d'une pluralité de matériaux et de composants consommés par la ligne de production ;
- recevoir une instruction pour effectuer une tâche de contrôle de la production, de l'approvisionnement et/ou de la distribution de l'un ou de plusieurs des matériaux et des composants ;
- identifier une pluralité de sous-tâches dans la tâche, dans laquelle chacune des pluralités des sous-tâches est associée à l'un des matériaux ou des composants ;
- pour chacune des pluralités des sous-tâches :
▪ accéder à la structure des données associée à la sous-tâche, la structure des données étant l'indication d'une pluralité de valeurs de la propriété attribuée à la sous-tâche ;
▪ déterminer si chaque valeur de la propriété de la pluralité des valeurs de la propriété est mise en oeuvre dans la base de données, dans laquelle une valeur de la propriété mise en oeuvre dans la base de données est une valeur de la propriété qui est reportée dans la base de données dans une ou plusieurs procédures enregistrées de ladite base de données ; et
▪ lorsque chacune des valeurs de la propriété parmi la pluralité des valeurs de la propriété de la sous-tâche est mise en oeuvre dans la base de données, effectuer la sous-tâche dans la base de données pour générer un résultat de la sous-tâche, en utilisant ainsi les données de surveillance comme entrée, pour lesquelles l'exécution de la sous-tâche dans la base de données comprend l'identification, par un module de répartition de la base de données, de l'une ou de plusieurs procédures enregistrées reportées dans chacune des valeurs de la propriété attribuée à ladite sous-tâche ; et l'exécution de la ou de plusieurs procédures enregistrées identifiées par la base de données ; et
▪ lorsque l'une ou plusieurs parmi les valeurs de la pluralité des valeurs de la propriété ne sont pas mises en oeuvre dans la base de données, effectuer la sous-tâche dans le programme de l'application (240, 916).

3. Système de planification des besoins en matériaux selon la revendication 2, dans lequel la réalisation de la sous-tâche dans la base de données comprend :
• le regroupement de manière sélective de l'une ou de plusieurs sous-tâches dont les valeurs de la propriété sont toutes mises en oeuvre dans la base de données dans un ou plusieurs ensembles de sous-tâches, dans lesquels toutes les sous-tâches regroupées dans l'un desdits ensembles ont associé le même matériau ou le même composant ; et
• la réalisation de l'exécution des sous-tâches dans la base de données d'une manière comparable à celui de l'ensemble, générant ainsi un résultat groupé par ensemble de sous-tâches, dans lequel les résultats de la sous-tâche des sous-tâches dudit ensemble sont cumulés pour calculer le seul résultat groupé.

4. Système de planification des besoins en matériaux selon l'une quelconque des revendications 2 à 3 précédentes, dans lequel la base de données (115, 912) est une base de données en mémoire.

5. Système de planification des besoins en matériaux selon l'une quelconque des revendications 2 à 4 précédentes, dans lequel la base de données (115, 912) est optimisée pour exécuter les opérations cumulées de la base de données.

6. Système de planification des besoins en matériaux selon l'une quelconque des revendications 2 à 5 précédentes, dans lequel la base de données (115, 912) est structurée de telle sorte que si une pluralité de sous-tâches est exécutée en tant qu'ensemble, le temps de traitement de chacune des sous-tâches individuelles est plus court que si elle était exécutée individuellement dans la base de données.

7. Système de planification des besoins en matériaux selon l'une quelconque des revendications 2 à 6 précédentes,
- dans lequel les sous-tâches qui sont de nature procédurale ont attribué au moins une valeur de la propriété qui n'est pas mise en oeuvre dans la base de données ; et
- dans lequel les sous-tâches qui peuvent être exécutées en parallèle en de multiples fils d'exécution, et/ou les sous-tâches qui mettent en oeuvre ou déclenchent l'exécution d'une fonction de cumul, ont attribué les valeurs de la propriété qui sont toutes mises en oeuvre par la base de données.

8. Système de planification des besoins en matériaux selon l'une quelconque des revendications 2 à 7 précédentes,
- dans lequel le système de planification des besoins en matériaux comprend une interface pour recevoir la tâche par l'intermédiaire d'un réseau,
- dans lequel déterminer si chacune des valeurs de la propriété de la pluralité des valeurs de la propriété est mise en oeuvre dans la base de données et est exécutée par un module de répartition du système de planification des besoins en matériaux, le module de répartition étant configuré pour déclencher la réalisation de chacune des sous-tâches dans la base de données si chacune des valeurs de la propriété de la pluralité des valeurs de la propriété de ladite sous-tâche est mise en oeuvre dans la base de données, et par ailleurs déclencher la réalisation de ladite sous-tâche par le programme d'application ; et
- dans lequel ladite interface est libre de toute référence à l'une des valeurs de la propriété.

9. Système de planification des besoins en matériaux selon l'une quelconque des revendications 3 à 8 précédentes, dans lequel le processeur est en outre configuré pour :
- dans le cas de chacun des ensembles dont les sous-tâches ont attribué l'un des composants, identifier un matériau du composant dudit composant ;
- attribuer une structure de données associée au matériau de composant, la structure de données étant l'indication d'une pluralité de valeurs de la propriété attribuées au matériau du composant ;
- déterminer que chacune des valeurs de la propriété parmi la pluralité des valeurs de la propriété attribuée au matériau du composant est mise en oeuvre dans la base de données ; et
- lorsque chacune des valeurs de la propriété de la pluralité des valeurs de la propriété attribuée au matériau du composant est mise en oeuvre dans la base de données, traiter le matériau du composant dans la base de données ;
- autrement, traiter le matériau du composant par le programme d'application.

10. Système de planification des besoins en matériaux selon l'une quelconque des revendications 3 à 9 précédentes, dans lequel le processeur est en outre configuré pour :
- identifier toutes les sous-tâches ayant attribué les valeurs de la propriété qui sont toutes mises en oeuvre dans la base de données mais qui n'ont pas été regroupées dans l'un parmi le ou plusieurs groupes des sous-tâches dans l'étape de regroupement ;
- traiter chacune des dites sous-tâches identifiées par le programme d'application plutôt que dans la base de données, dans lequel le programme d'application génère un résultat pour la sous-tâche de chacune des dites sous-tâches ; et
- combiner le ou plusieurs résultats d'ensemble générés dans la base de données avec les résultats des sous-tâches en traitant la sous-tâche par le programme d'application.

11. Système de planification des besoins en matériaux selon l'une quelconque des revendications 2 à 10 précédentes, dans lequel au moins plusieurs parmi les composants consistent en un ou plusieurs niveaux de sous-composants et dans lequel le processeur est en outre configuré pour :
- traverser le seul ou plusieurs niveaux pour identifier, pour chacun des niveaux et pour chacun des sous-composants, la sous-tâche plus lointaine correspondante, dans lequel chacune desdites sous-tâches plus lointaines identifiée est associée avec l'un des sous-composants ;
- à chacun desdits niveaux et pour chacune desdites sous-tâches plus éloignée :
∘ accéder à la structure des données associée à la sous-tâche plus lointaine, la structure de données étant un indicateur d'une pluralité plus éloignée des valeurs de la propriété attribuées à ladite sous-tâche plus éloignée ;
∘ déterminer si chacune des valeurs de la propriété de la pluralité plus éloignée des valeurs de la propriété est mise en oeuvre dans la base de données ; et
∘ lorsque chacune des valeurs de la propriété de la pluralité plus éloignée des valeurs de la propriété est mise en oeuvre dans la base de données, réaliser la sous-tâche plus éloignée dans la base de données pour générer un résultat de la sous-tâche plus éloignée, en utilisant ainsi les données de surveillance en tant qu'entrée ; et
∘ lorsque l'une ou plusieurs parmi les valeurs de la propriété de la pluralité plus éloignée des valeurs de la propriété ne sont pas mises en oeuvre dans la base de données, réaliser la sous-tâche plus éloignée par le programme d'application (240, 916) ;
∘ après avoir traité toutes les sous-tâches plus éloignées de l'un desdits niveaux présents, calculer un résultat combiné à partir des résultats des sous-tâches plus éloignées renvoyées par la base de données et/ou le programme d'application.

12. Procédé de planification des besoins en matériaux d'un système de fabrication automatisé par un système de planification des besoins en matériaux, le système de planification des besoins en matériaux comprenant une base de données (115, 912), un programme d'application (240, 916) et un processeur (914) pour exécuter le procédé, le procédé comprenant :
- la réception à maintes reprises en entrée des données de surveillance en entrée et l'enregistrement des données de surveillance dans la base de données, les données de surveillance comprenant le nombre et le type d'une pluralité de matériaux et de composants consommés par la ligne de production du système de fabrication automatisé pour la production d'une pluralité de marchandises ;
- la réception d'une instruction pour effectuer une tâche de contrôle de la production, de l'approvisionnement et/ou de la distribution de l'un ou de plusieurs parmi les matériaux et les composants ;
- l'identification d'une pluralité de sous-tâches dans la tâche, dans laquelle chacune des pluralités des sous-tâches est associée à l'un des matériaux ou des composants ;
- pour chacune des pluralités des sous-tâches :
∘ accéder à la structure des données associée à la sous-tâche, la structure des données étant l'indication d'une pluralité de valeurs de la propriété attribuée à la sous-tâche ;
∘ déterminer si chacune des valeurs de la propriété de la pluralité des valeurs de la propriété est mise en oeuvre dans la base de données, dans laquelle une valeur de la propriété mise en oeuvre dans la base de données est une valeur de la propriété qui est reportée dans la base de données dans une ou à plusieurs procédures enregistrées de ladite base de données ; et
∘ lorsque chacune des valeurs de la propriété de la pluralité des valeurs de la propriété de la sous-tâche est mise en oeuvre dans la base de données, effectuer la sous-tâche dans la base de données pour générer un résultat de la sous-tâche, en utilisant ainsi les données de surveillance comme entrée, où l'exécution d'une sous-tâche dans la base de données comprend l'identification, par un module de répartition de la base de données, de l'une ou de plusieurs procédures enregistrées reportées dans chacune des valeurs de la propriété attribuée à ladite sous-tâche ; et exécuter la ou plusieurs procédures enregistrées identifiées par la base de données ; et
∘ lorsque l'une ou plusieurs parmi les valeurs de la pluralité des valeurs de la propriété de la pluralité des valeurs de la propriété ne sont pas mises en oeuvre dans la base de données, effectuer la sous-tâche par le programme de l'application (240, 916).

13. Procédé selon la revendication 12 étant mis en oeuvre par un système de planification des besoins en matériaux selon l'une quelconque des revendications 2 à 11 précédentes.
